(19) Europäisches Patentamt
European Patent Office
Office européen des brevets

(11) Publication number: 0 200 568 A2

(12) EUROPEAN PATENT APPLICATION

(21) Application number: 86303378.3

(22) Date of filing: 02.05.86

(51) Int. Cl.4: C 04 B 41/87
C 04 B 41/89

(30) Priority: 02.05.85 US 729691

(43) Date of publication of application: 05.11.86 Bulletin 86/45

(84) Designated Contracting States: AT BE CH DE FR GB IT LI LU NL SE

(71) Applicant: Refractory Composites Inc.
12220-A Rivera Road
Whittier California 90606(US)

(72) Inventor: Warren, James W.
24300, Aetna Street
Woodland Hills, Ca 91367(US)

(74) Representative: Marlow, Nicholas Simon et al,
Reddie & Grose 16, Theobalds Road
London WC1X 8PL(GB)

# (54) Refractory composite material and method of producing material.

(57) A porous, permeable substrate has a first coefficient of thermal expansion. The substrate may be formed from a plurality of discrete elements defining interstices. A matrix is disposed on the substrate without any chemical bond to the substrate. The matrix has a second coefficient of thermal expansion different from the first coefficient of thermal expansion and is free to move relative to the substrate with changes in temperature. The matrix may constitute a non-stoichiometric compound formed from a metal and a material providing negatively charged ions. The excess from the stoichiometric ratio in the amount of the metal or the material providing the negatively charged ion controls the properties of the matrix. The relative amount of the excess of the metal or the material providing the negatively charged ions from the stoichiometric ratio may be varied at different thicknesses of the matrix to vary the properties of the matrix at the different thicknesses. The matrix may have microscopic cracks in its periphery. A porous, impermeable coating may be disposed on the matrix and may be provided with substantially the second coefficient of thermal expansion. The impermeable coating covers the microscopic cracks and is instrumental in preventing the matrix from oxidizing. A porous, impermeable coating may also be disposed between the substrate and the matrix and may be provided with substantially the second coefficient of thermal expansion. This coating prevents the substrate from oxidizing. The different coatings or layers may be formed by a continuous process or by cyclic or pulsing techniques.

EP 0 200 568 A2

Croydon Printing Company Ltd.

# REFRACTORY COMPOSITE MATERIAL AND METHOD OF PRODUCING MATERIAL

This invention relates to refractory composite articles and to methods of producing such articles.

In recent years, a large and growing need has emerged for articles exhibiting a number of characteristics which are individually hard to achieve but which collectively have made attainment seem almost impossible. For example, the articles have been desired to be hard, tough and wear-resistant. The articles have also been desired to be resistant to corrosion and to erosion and to acids and bases normally encountered in commercial and industrial environments. The articles have also been desired to provide these characteristics through ranges of temperatures of several thousands of degrees centigrade.

A considerable effort has been made, and substantial sums of money have been expended, to provide articles which meet the above specifications. In spite of such efforts and such expenditures of money, problems have still remained. A material has still not been provided which meets all of the parameters specified above.

In U.S. Patent No. 4,397,901 issued on August 9, 1983 for "Composite Article and Method of Making Same" is disclosed and claim a refractory composite material which fulfills the parameters specified above. For example, the article disclosed and claimed in U.S. Patent No. 4,397,901 is hard, tough, dimensionally stable, resistant to corrosion and erosion and capable of operating satisfactorily through extended ranges of temperatures in excess of 2000°F. The article disclosed and claimed in U.S. Patent No. 4,397,901 is also relatively light and is able to provide the characteristics discussed above even when produced in relatively thin layers.

This invention provides a combination of a matrix and a substrate which meet all of the conditions specified above but have enhanced characteristics relative to the material of U.S. Patent No. 4,397,901. For example, the characteristics of the matrix may be controlled to adjust the density of the matrix and the ability of the matrix to withstand oxidation. The invention also relates to a

combination of a substrate and a matrix and, in addition, a layer of a material disposed between the substrate and the matrix to prevent the substrate from becoming oxidized. The invention also relates to methods of producing such combinations.

In one embodiment of the invention, a porous, permeable substrate has a first coefficient of thermal expansion. The substrate may be formed from a plurality of discrete elements defining interstices. A matrix is disposed on the substrate without any chemical bond to the substrate. The matrix has a second coefficient of thermal expansion different from the first coefficient of thermal expansion and is free to move relative to the substrate with changes in temperature.

The matrix may constitute a non-stoichiometric compound formed from a metal and a material providing negatively charged ions. The excess from the stoichiometric ratio in the amount of the metal or the material providing the negatively charged ion controls the properties of the matrix. The relative amount of the excess of the metal or the material providing the negative ion from the stoichiometric ratio may be varied at different thicknesses of the matrix to vary the properties of the matrix at the different thicknesses.

The matrix may have microscopic cracks in its periphery. An impermeable coating may be disposed on the matrix and may be provided with substantially the second coefficient of thermal expansion. The impermeable coating covers the microscopic cracks and is instrumental in preventing the matrix from oxidizing. An impermeable coating may also be disposed between the substrate and the matrix and may be provided with substantially the second coefficient of thermal expansion. This coating prevents the substrate from oxidizing. The impermeable coatings may be viscous.

The different layers or coatings specified above may be formed by continuous techniques or by cyclic or pulsing techniques. In the cyclic or pulsing techniques, a series of individual steps are performed in sequence for controlled periods of time under controlled parameters and are then repeated. This provides for a progressive increase in the thickness of the different coatings or layers.

In the drawings:

Figure 1 is a schematic drawing of apparatus for producing the articles of this invention;

Figures 2 through 7 are schematic illustrations of different embodiments of articles included within this invention;

Figure 8 is a table showing the wear-test characteristics of different specimens of articles included within the scope of this invention; and

Figures 9 through 16 are copies of photographs, generally quite magnified, of the construction and characteristics of different specimens of articles included within the scope of this invention.

In one embodiment of the invention, a substrate generally indicated at 10 may be provided with porous, permeable properties. The substrate 10 is included in an article generally indicated at 11. The substrate may be formed from discrete elements 12 such as fiber or grains or a mixture of fibers and grains. The discrete elements may have a carbon or ceramic base. By way of illustration, the discrete elements may be formed from a suitable material such as pyrolyzed wool, rayon, polyacrylonitrile and pitch fibers. Carbonized rayon felt, chopped fibers of carbonized polyacrylonitrile, carbonized rayon cloth made from interwoven carbon fibers, a tape material made of closely woven, carbonized PAN fibers, a macerated material comprising a multiplicity of randomly oriented pyrolyzed wool fibers and a macerated material having a

multiplicity of chopped pitch fibers have specifically been used.

The substrate can also advantageously be formed from a slurry comprising granular material such as silicon carbide or graphite. Such granular material can also be mixed with short lengths of high temperature resistant fibers selected from the group consisting of ceramic, pyrolyzed wool, rayon, polyacrylonitrile and pitch. The slurry may also include a suitable carbonaceous binder such as petroleum pitch, coal tar pitch, furan resins and phenolic resins. The slurry used to form the substrate may also comprise short lengths of polyacrylonitrile fibers intermixed with silicon carbide in granular form.

The different substrates described above may be formed on a continuous basis or may be formed by cyclic or pulsing techniques. When cyclic or pulsing techniques are used, a sequence of steps is provided under controlled conditions for limited periods of time and the sequence is repeated more than once. An example is specified subsequently in Example 11.

The substrate described in the previous paragraph may be directly coated with a matrix 14 as shown in Figure 2. However, in order to coat the matrix 14 directly on the substrate 10, the substrate 10 is initially shaped preferably to a configuration corresponding to that desired for the finished article. The substrate 10 is then preferably retained in the desired configuration while the matrix 14 is being deposited on the substrate 12. This retention may be provided by a tool or

fixture (not shown) which is constructed to retain the substrate 10 in the desired configuration while still providing for the coating of the matrix at every desired position on the substrate. Coating of the matrix on the substrate in this manner is advantageous in that it is direct and does not require any intermediate preparation of the substrate. However, it generally requires the preparation of special tools and fixtures. Furthermore, it increases the space requirements for the coating operation because of the use of the tools or fixtures. It also tends to slow the rate at which the matrix 14 is coated on the substrate 10.

Alternatively, pyrolyzed carbon 16 may be deposited on the substrate 10, as shown in Figure 3, before the deposition of the matrix on the substrate. The pyrolyzed carbon 16 facilitates the promotion of a good load transfer between fibers, particularly when the article is stressed. The pyrolyzed carbon 16 also helps to strengthen and stabilize the substrate 10, particularly when the article is subjected to stress. It also enhances the mechanical interface for increasing the surface fracture energy of the composite structure defining the article 11, thus enhancing the toughness and flow resistance of the refractory composite article 11.

To provide the coating 16 of pyrolyzed carbon on the substrate 10, the substrate may be disposed in a furnace of conventional design. The temperature of the substrate may then be raised to a suitable temperature such as approximately 1800°F. and a vacuum in the order of 15mm mercury (hg) may be maintained within the deposition chamber. Pyrolyzed carbon may

then be deposited about each of the discrete elements 12 in the substrate 10 by flowing methane gas through the porous substrate for an extended period of time such as about fifty (50) hours.

When the pyrolyzed carbon is deposited on the substrate 10 in the manner discussed in the previous paragraph, it encases the discrete elements defining the substrate. This is illustrated schematically at 16 in Figure 1. The layer of pyrolyzed carbon 16 is porous and pervious. With a density of the substrate in the order of 0.1 gm/cc and a fiber volume of about fifteen percent (15%) before the deposition of the pyrolyzed carbon 16, the substrate encased with the pyrolyzed carbon may have a density in the order of 0.75 gm/cc. The pyrolyzed carbon 16 serves to position the discrete elements 12 in the substrate 10 and to strengthen the substrate for handling purposes. In this way, the matrix 14 can be deposited on the substrate 10 without requiring any tools or fixtures to be used.

The pyrolyzed carbon 16 can be deposited on the substrate by other techniques than those discussed above. For example, the substrate 10 can be coated with any suitable and conventional type of resin such as a phenolic designated by Monsanto Chemical Company as Monsanto 1008. As a first step, the phenolic may be dissolved in a solvent such that it is fluid. The solvent may illustratively be methylethylketone. The substrate 10 may then be coated with the phenolic and partially polymerized so that it is dry to the touch. Patterns of the desired shape can then be cut from the substrate 10 or the substrate can be heated to a temperature of at least 160°F, compressed and then cut to the desired shape. The patterns in

the desired shape may then be placed in a mold and heated to a suitable temperature such as approximately 350°F to cure the phenolic. The patterns may then be cured at a temperature above 350°F to stabilize the system.

The phenolic is then pyrolyzed at a temperature of approximately 1600°F. to decompose it to carbon, its elemental form. One reason for the pyrolysis is to prevent the substrate from thereafter emitting gases when it is heated. However, the discrete elements 12 are retained in position by the pyrolyzed carbon 16 which is disposed in the interstices between the discrete elements, as shown in Figure 6. The deposition of the pyrolyzed carbon 16 in the interstices between the discrete elements 12 is illustrated schematically at 22 in Figure 2. The combination of the discrete elements 12 and the pyrolyzed carbon 16 in the interstices 22 is porous and pervious.

When the binder constituting the phenolic is pyrolyzed as discussed in the previous paragraph, it loses approximately half of its mass and it shrinks and cracks. In spite of this, the pyrolyzed carbon is able to hold the discrete elements 12 in position in the substrate and to impart strength to the substrate. The substrate 10 is then heated to a temperature of approximately 2200°F. for a relatively short period of time to impart a final shrink and pyrolyzation to the binder.

Polyurethane or polyethylene can be included in the phenolic binder before the binder is cured and pyrolyzed as discussed in the previous paragraphs. When the substrate 10 and the binder are then heated to approximately 1600°F., the

polyurethane or polyethylene vaporizes and facilitates the formation of tunnels in the substrate. As will be disclosed in detail subsequently, the tunnels are effective in providing paths for depositing the matrix 14 on the substrate 10 as by chemical vapor deposition.

Instead of using a wet binder to coat the discrete elements 12, a dry binder may be used. Dow Corning Polycarbosilane 6-2330 is illustrative. This is a dry resin which may be mixed with methyl ethyl ketone to provide a fluid mixture with which to work. This material has properties of becoming partially polymerized at room temperatures. The material is mixed with the substrate and is then heated to a temperature of approximately 1600°F. to pyrolyze the binder. The material is subsequently heated to a temperature of approximately 2200°F. to provide it with a final pyrolyzation and shrink.

Sodium silicate or colloidal alumina can also be used as binders. The substrate 10 may be dipped into sodium silicate in liquid form and may then be heated. The sodium silicate flows along the lengths of the discrete elements 10 and tends to congregate or agglomerate at the interstices between the discrete elements. The formation of layers of material at the interstices between the fibers of the substrate 10 is shown in Figures 6 and 7.

As will be appreciated, the characteristics of the substrate can be considerably varied without departing from the scope of the invention. For example, when fibers are used in a woven form, the relative numbers of threads in warp and woof can

be varied in great proportions and the spacings between the threads can also be varied considerably.

A suitable material such as silicon carbide can be applied to the substrate 10 to form an intermediate layer 24 between the substrate 10 and the matrix 14. This intermediate layer 24 may be deposited on the substrate 10 before the deposition of the matrix 14, as shown in Figure 4. The intermediate layer 24 may also be deposited on the pyrolyzed layer 16 as shown in Figure 5. This intermediate layer 14 may have a density in the order of 1 gram/cubic centimeter. To produce this intermediate layer 24, the temperature of the substrate may be raised to about 1600°F. - 2200°F. and a vacuum in the order of about 0.1 to 0.6 atmosphere may be maintained within the furnace. A methylchlorosilane gas may then be flowed interstitially through the substrate for a period of about one (1) to (20) hours. By this method, a substantially uniform layer 24 of pyrolytic silicon carbide may be deposited about each of the fibers within the substrate to form the intermediate substrate with the density in the order of about 0.4 to 2.35 gram/cubic centimeter. Other suitable materials for the layer 24 may be metal oxides, metal nitrides, metal silicides, metal borides and metal carbides. The intermediate layer 24 may be viscous.

As previously described, the substrate 10 is porous and pervious. This means that air can penetrate into the substrate and oxidize the carbon in the substrate. This can produce a deterioration in the properties of the substrate over a period of time. The matrix 14 may not be helpful in inhibiting the oxidation of the substrate since the matrix is

generally porous and permeable. The intermediate layer 24 is accordingly helpful in inhibiting the oxidation of the substrate 10.

The impermeable coating 24 may be deposited on the substrate 10 before the matrix 14 is deposited on the substrate. When the pyrolyzed carbon 16 encases the discrete elements 12, the impermeable coating 24 encases the pyrolyzed carbon as schematically shown in Figure 2. The impermeable coating 24 is disposed in the interstices between the discrete elements 12, as shown schematically in Figures 6 and 7, when the pyrolyzed carbon is disposed in the interstices.

The coating 24 may be relatively thin since its primary function is to serve as a barrier for preventing air from reaching the substrate to oxidize the substrate. However, it also renders the substrate 10 impervious to corrosion and erosion caused by high temperatures and exposure to hostile fluids. The impermeable coating 24 may be made from a suitable material such as silicon nitride.

When the coating 24 of silicon nitride is deposited on the substrate 10, it does not have any chemical bond with the substrate. Furthermore, any mechanical bond between the coating 24 of silicon nitride and the substrate 10 is relatively weak. Since a strong bond is absent between the substrate 10 and the coating 24, increased surface fracture energy (toughness) is produced between the substrate and the coating. Flow sensitivity in the article is also reduced.

The coating 24 of silicon nitride also has a significantly different coefficient of thermal expansion than

the substrate 10. As a result, the layer 24 of silicon nitride is free to move relative to the substrate 10 with changes in temperature. This is particularly important because of the considerable range of temperatures (in the thousands of degrees Fahrenheit) in which the articles formed from the refractory composite materials of this invention are expected to work.

The coating 24 of silicon nitride may be deposited on the substrate 10 as by techniques of molten liquid as disclosed in Patent No. 4,397,901. For example, the substrate 10 may be heated to a temperature of about 3200°F. in a controlled environment which is maintained at slightly greater than atmospheric pressure and a slurry of elemental silicon may be deposited on the discrete elements 12 coated with the pyrolytic carbon 16. The silicon-coated substrate 10 may then be heated to a temperature of about 3200°F. in the controlled environment and suitable gases such as silicon chloride and nitrogen may be passed through, and about, the article to deposit a coating of silicon nitride on the substrate so as to form the layer 24.

Alternatively, the coating 24 of silicon nitride may be directly deposited on the substrate 10, as shown in Figure 4, without first having to deposit molten silicon on the substrate as by the methods of the previous paragraph. This direct deposition may be accomplished as by a chemical vapor deposition. This may be accomplished by heating the substrate 10 in a controlled environment to a suitable temperature such as about 1800°F. and then passing gases containing silicon and nitrogen through and about the substrate. For example, the gases may be silicon chloride and nitrogen.

As previously described, the matrix 14 may be applied directly to the substrate 14. However, when the coating 24 is included, the matrix 14 may be applied on the coating. The matrix 14 has substantially the same coefficient of thermal expansion as the coating 24. This causes the matrix 14 to expand with the coating 24 when it is disposed on the coating. The matrix 14 encases the coating 24 when the coating encases the substrate 10. The matrix 14 is disposed in the interstices of the discrete elements 12 when the coating 24 is disposed in such interstices.

When the matrix 14 is disposed on the substrate 10 without the intermediate disposition of the coating 24, the matrix 14 encases the pyrolyzed carbon 16 when the pryolyzed carbon encases the discrete elements 12. The matrix 14 is disposed in the interstices beween the discrete elements 12 when the pyrolyzed carbon 16 is disposed in such interstices. The matrix 14 does not have any chemical bond with the substrate 10. Furthermore, any mechanical bond between the matrix 14 and the substrate 10 is relatively weak when the matrix is disposed directly on the substrate.

The matrix 14 may be formed from a suitable material consisting of a metal and a material providing negatively charged ions. Preferably the matrix 14 may be formed from a material selected from a group consisting of silicon nitride, silicon carbide and silicon oxide. The matrix 14 may be preferably formed from silicon carbide. Silicon carbide is advantageous because it is hard and tough and provides good protection to the substrate.

To apply the matrix 14 on the substrate 10, the substrate may be disposed in a furnace and heated to a temperature in the range of about 1350°F. to 2500°F. Preferably the substrate 10 is heated to a temperature of about 1800°F. in a mild vacuum. This temperature is intermediate a preferred temperature range of about 1600°F. to 2000°F. A suitable gas containing silicon and carbon may then be passed through and over the substrate 10 in the furnace. For example, suitable gases such as methyltrichlorosilane, dimethyldichlorosilane and trimethylchlorosilane may be used. The gas may be allowed to fill the furnaces to a pressure between about 0.01 and 0.6 atmospheres.

Following the introduction into the furnace of the gases containing the silicon and the carbon, the gases are withdrawn from the furnace by producing a mild vacuum. New gases containing silicon and carbon are then introduced into the furnace. This process is repeated through a number of cycles until the matrix has been formed with the desired thickness. The temperature of the substrate 10 may be intermittently raised to about 2700°F to produce a dimensional stability between the silicon carbide in the matrix 14 and the pyrolyzed carbon 16 on the substrate 10.

The following chemical reaction may be produced when the gases contain methyltrichlorosilane:

$$SiCH_3Cl_3 \xrightarrow{Heat} Si + C + 3HCl \qquad (1)$$

This chemical reaction is endothermic because it requires the addition of heat. The next reaction is exothermic:

$$Si + C + 3HCl \rightarrow SiC + 3HCl \qquad (2)$$

Another chemical reaction, also exothermic, after reaction (1) may be:

$$Si + 3C + 3HCl \rightarrow SiC + 2C + 3HCl \qquad (3)$$

A further chemical reaction, also exothermic, after reaction (1) may be:

$$Si + C + 3HCl \rightarrow SiC + 3HCl \qquad (4)$$

The particular chemical constituents produced are dependent upon certain parameters including temperature, pressure, gases used, flow rate of the gases and mass rate of the gases. The mass rate is in turn dependent upon-such factors as flow rate and the particular gases used.

The periodic introduction of gases to the furnace and subsequent exhaustion of these gases from the furnace provide certain important advantages. As will be seen, the composition of the gases introduced to the furnace changes with time because of the chemical reactions in the gases and because of the exhaustion of the gases as the gases are chemically reacted to produce the matrix 14. This causes the properties of the matrix 14 to vary with time. By exhausting these gases from the furnace after a relatively short period of time and subsequently

introducing a new supply of such gases, relatively constant characteristics can be provided for the matrix 14 along the full thickness of the matrix. Alternatively, the characteristics of the matrix 14 can be precisely controlled along the full thickness of the matrix to provide the matrix with the optimal properties desired for the matrix at the progressive thicknesses of the matrix.

Trimethylchlorosilane is more unstable than dimethyldichlorosilane, which is in turn more unstable than methyltrichlorosilane. Since trimethychlorosilane is the most unstable of the three (3) chlorosilane compounds, it degenerates into its components more easily than the other compounds. Since the degeneration of trimethychlorosilane occurs more easily than the degeneration of the other gases and since the gases produced from the degeneration of the trimethylchlorosilane are lighter than the trimethylchlorosilane, the gases produced from the degeneration of the trimethylchlorosilane are able to travel further in an increment of time than the gases produced from the degeneration of dimethyldichlorosilane or from the degeneration of methyltrichlorosilane. This provides for a deposit of the gas components on the peripheral edges of the article more easily when trimethylchlorosilane is used than when other compounds are used.

The characteristics of the matrix can be varied by varying the characteristics of the chemical vapor deposition. For example, the composition of the gases, the temperature and pressure of the gases and the flow rate and mass rate of the gases can be varied to affect the characteristics of the matrix

14. The size of the grains in the matrix 14, the orientation of the grains in the matrix and the relative amounts of free carbon and free silicon in the deposition can be controlled in this manner. The microscopic density of the silicon carbide in the matrix 14 can also be varied in this manner.

As will be appreciated, the silicon carbide in the matrix 14 can be provided with a stoichiometric ratio or with a non-stoichromatric ratio. When the silicon carbide is stoichiometric, the relative amounts of silicon and carbon can be predicted on the basis of their relative atomic weights. When there is an excess of silicon or carbon in the matrix above the stoichiometric ratio of these elements, the matrix can be considered to be non-stoichiometric. An excess of carbon in the matrix 14 produces an increase in the hardness of the matrix but also increases the tendency of the matrix to be oxidized by oxygen from the air. An excess of silicon in the matrix 14 decreases the hardness of the matrix but increases the ability of the matrix to withstand oxygen from the air. As will be appreciated, the particular material chosen to provide the excess above the stoichiometric ratio at any thickness of the matrix, and the relative amount of such excess at such thickness, can be chosen to tailor the characteristics of the matrix at the different thicknesses.

The grain structure of the matrix 14 can be varied by varying the parameters discussed above. For example, the size of the grain can be varied between approximately fifty angstrom (50A) and approximately five microns (5u), which is in excess of fifty thousand Angstroms (50,000A). Generally, the strength of

the matrix 14 is enhanced as the grain size is decreased. Actually, the grain size can be tailored to different values at different thicknesses of the matrix.

Actually, there is probably a reduction in density from a stoichiometric relationship of a material such as silicon carbide in the matrix to a non-stoichiometric relationship of the material such as silicon carbide in the matrix. However, since the atomic weight of silicon is greater than that of carbon, there is less of a reduction in density for a particular excess of silicon in the matrix than for the same excess of carbon in the matrix.

Thus, as will be seen, the properties of the matrix 14 can be varied at progressive thicknesses of the matrix. For example, it may be initially desirable to provide an excess of silicon in the matrix 14 so as to inhibit the oxidation of the matrix, at least in the areas adjacent the substrate 10. It may be subsequently desirable to provide the matrix 14 with an excess of carbon. This provides the external surface of the matrix 14 with hard and dense characteristics.

Other gases can be included in the chemical vapor deposition in addition to those specified above. For example, gases of argon and helium can be included in the gases introduced to the furnace. Both argon and helium are neutral. They impart energy to the gases in the furnace and they control the rate at which the matrix 14 is deposited on the substrate. They also control the characteristics of the deposition.

The relative amount of hydrogen in the gases can also be varied. The relative amount of hydrogen affects the chemical and heat balance of the gases introduced to the furnace. As a result, the relative amount of hydrogen in the gases affects the characteristics of the deposition. For example, when the furnace is maintained at a relatively low temperature and a considerable amount of hydrogen is introduced into the furnace, an excess of silicon above the stoichiometric ratio tends to be deposited. Furthermore, even slight changes in temperature can affect the hardness of the deposition. By way of illustration, a change of about 10°F. in the furnace can produce a change of as many as 1000 points in Vickers hardness out of a range of approximately 1300-4400 in Vickers hardness. Thus, the mixture of a small amount of hydrogen with the gases producing the matrix 14 may have a significant effect on the hardness of the matrix which is produced.

Boron can also be included in the gases introduced into the furnace to obtain the chemical vapor deposition. The inclusion of boron in the mixture enhances the tendency of the matrix 14 produced from the deposition of the gases to be forgiving. This enhances the toughness of the matrix 14 and the ability of the matrix to withstand strain. The boron in the mixture acts as a getter. It accumulates the material of the matrix 14, such as silicon carbide, from active sites and causes the silicon carbide from such active sites to be sintered together. Without the inclusion of the boron, the silicon carbide tends to be deposited at the active sites. Nominally about two percent (2%) by weight of the boron may be included in the mixture. Preferably the range of boron is about one percent

(1%) to three (3%) by weight. Preferably less than five percent (5%) of boron by weight is included in the mixture.

Other gases may be used in producing a chemical vapor deposition of the matrix 14 on the substrate 10. For example, a mixture of silicon tetrachloride and methane may be used. The mixture of silicon tetrachloride and methane tends to produce a deposition of silicon carbide to form the matrix. Such a mixture may require a greater amount of energy to produce the matrix than some of the gases specified above.

As will be appreciated, the substrate 10 disposed in the furnace can be pre-heated to impart energy to the gases in the furnace for enhancing the production of a chemical reaction of the gases. The resultant deposition of the material such as silicon carbide on the substrate 10 to form the matrix 14 has first characteristics. Alternatively, the substrate does not have to be pre-heated before being introduced into the furnace. In either case, the gases receive sufficient kinetic energy to produce chemical reactions when they collide. Particles of silicon carbide are produced as a soot in free space as a result of such collisions and as a result of the chemical reactions occurring during the collisions.

The characteristics of the silicon carbide produced without pre-heating the substrate 10 are different from the characteristics of the silicon carbide produced by pre-heating the substrate. This results in part from differences in microscopic structure of the grains of silicon carbide deposited on the substrate. As will be appreciated, in addition to

forming the matrix 14 by the two separate techniques discussed above, the matrix 14 can be formed by a combination of such techniques to provide the matrix with a blend of characteristics.

When the matrix 14 is formed from a suitable material such as silicon carbide in the manner described above, it tends to receive microscopic cracks in its periphery. These cracks are advantageous because they tend to impart resilience and flexibility to the matrix, particularly when the matrix is subjected to stresses. The cracks are disadvantageous because they increase the amount of the surface exposed to oxygen. As a result, there tends to be an increase in the rate at which the matrix 14 is oxidized.

An impermeable coating 36 may be disposed on the matrix 14 to cover the matrix and inhibit the oxidation of the matrix. This is particularly important when the matrix 14 has the microscopic cracks as discussed above. The coating 36 may be formed from a suitable material such as silicon oxide. Silicon oxide is advantageous because it is hard and impermeable and because it is impervious to oxygen. For example, since the silicon oxide already includes oxygen, it cannot be oxidized by the oxygen in the air. The silicon oxide has substantially the same coefficient of thermal expansion as the silicon carbide in the matrix 14. Because of this, it has properties of moving with the matrix 14 with changes in temperature. The coating of silicon oxide may be deposited on the matrix under substantially the same conditions of various parameters such as temperature pressure and flow rate as those used to deposit the matrix 14 of

silicon carbide on the substrate. The deposition of the silicon oxide on the matrix 14 may also be accomplished by liquid spray or immersion such as discussed above. Other materials such as silicon nitride may be provided as the layer 36. Furthermore, other materials such as metal oxides, metal nitrides, metal silicides, metal borides and metal carbides may also be used as the layer 24. The layer may be viscous.

Figure 1 illustrates a schematic diagram of a furnace, generally indicated at 40, which may be used to produce the composite materials described above. The furnace 40 includes an enclosure 42 having an inlet 44 and an outlet 46. Gases, such as those used to produce a chemical vapor deposition of the matrix 14 on the substrate 10, are introduced into the furnace 40 through the inlet 44. The gases flow downwardly along the walls defining the enclosures as indicated by arrows 48. The gases then flow upwardly along a partition 50, as indicated by arrows 52. Since the path defined by the arrows 48 and 52 within the furnace 40 is relatively long, the gases have a considerable opportunity to become heated to the temperature of the furnace 40. The gases then flow downwardly within the space defined by the partition 50 and flow from the furnace 40 through the outlet 46. During the flow of the gases within the partition 48, the gases have an opportunity to become deposited on the article, such as the substrate 10, in which a deposition is to be provided.

## EXAMPLES

Example No. 1

Starting Substrate - Carbonized Rayon Felt

1/4" x 1/2" x 4" - Density=.1gm/cc

Fiber Volume about 7%

The substrate was heated to approximately 1150°-1250°C to thermally stabilize the substrate. The temperature of the substrate was then reduced to a value between approximately 700°-1000°C.

Then approximately 200 cc. hr of $H_2SiCl_2$ Díchlorosilane) and 5 LPM (liter/min) of $NH_3$ (Ammonia) were flowed through the substrate for approximately 15 minutes to deposit approximately 1000A-5000A (angstrom) of $Si_3N_4$ (Silicon Nitride) coating on and about the surfaces of all of the fibers throughout the felt substrate (Slides). This constitutes the intermediate layer 24.

The combination of the substrate 10 and the intermediate layer 24 was removed and inspected. The combination was then replaced in the furnace and heated to a temperature between about 900°C and 1200°C and preferably about 1040°C and infiltrated with methyltrichlorosilane using applicant's standard conditions for a total of 25 hours to form the matrix 14 and bring the density of the composite to about 1.50 gm/cc. The standard conditions are set forth in row 5 of the table constituting Figure 8.

Then the composite material was vacuum impregnated with a 12% $B_2O_3$ (Boron oxide) doped TEOS (Tetraethylorthosilicate). The composite was then hydrolized in a humidity chamber to form alcohol and a borosilicate residue on the surface of the exposed surfaces in the SiC (silicon

carbide) matrix 14 and the fiber substrate 10 throughout the system.

A borosilicate residue is advantageous because boron depresses the temperature at which glass softens. This causes the softening temperature of the glass to be reduced to a sufficiently low value so that the layers in the composite cannot be oxidized because the energy in the layers is insufficient to accomplish this. The composite was then placed in a vacuum chamber and heated to a temperature of about 1200°C to densify and flow the glaze. This provided a 1-5 micron coating on all exposed surfaces.

Example No. 2

Rayon, pitch, PAN (acrylic) based carbon fibers or silicon carbide, alumina mullite, quartz, zirconia silica or other ceramic fiber have been used as the substrate.

The volume fraction (V/O) of the substrate was between about 2.5-60%. The volume fraction of the substrate was normally about 35%. The volume fraction indicates the relative volume of the substrate material in the total volume of the substrate 10.

A binder was used to hold the fibers in position during the matrix infiltration.

The binder can be any material that, when heated to a temperature of about 1200°C, provides a pyrolized residue to hold the fibers in their

final shape, orientation and volume fraction. Phenolic resin has been most commonly used but many others are available. A primary key lies in providing a substrate with open pores and a minimum of pores with bottlenecks so that reactive gases for producing the subsequent layers are free to permeate the composite structure. The intermediate layer 24 and the matrix 14 for the second example were produced as in the first example.

Example No. 3

Alternate binders for Example No. 2 have been phenolic with approximately 5-20% of polyurethane, styrene or other suitable filler that will enhance the open nature of the pore structure. Alternate binders may also include colloidal silica and colloidal alumina. In addition, the use of fugitive fillers with reduced melting temperatures has provided open gas paths to reduce the time of processing the phenolic. A fugitive filler vaporizes at elevated temperatures and produces pores to enhance the open nature of the substrate. An example of a fugitive filler is nylon which melts or vaporizes at relatively low temperatures. When the nylon melts or vaporizes, it runs and produces tunnel-like pores in the substrate.

Example No. 4

An alternate binder to those specified in Example #2 has also been a polycarbosilane resin which has been processed similarly to the phenolic. It tends to heat shrink about the fibers of the substrate during pyrolysis, thus enhancing the open pore structure of the substrate and reducing bottleneck porosity of the substrate. Pyrolysis of the substrate in a vacuum or in an inert atmosphere has resulted in a silicon, carbon or nitrogen type of residue. However, pyrolysis of the substrate under atmospheric conditions has resulted in a low density $SiO_2$ residue which has a low strength but which is quite suitable as a binder for ceramic fibers that would otherwise react with the carbon of an organic binder. As will be appreciated, since the residue is silicon dioxide, it does not react with the binder.

Example No. 5

Silicon carbide (SiC) or Carbon-infiltrated SiC or graphite grain or fiber have been used as the substrate. Graphite or other high temperature materials with an appropriate coefficient of thermal expansion have also been used as the substrate.

The substrate was placed in a vacuum chamber and heated to a temperature between approximately 900°C and 1200°C.

The pressure in the vacuum chamber was about 5mm(Torr) to 250mm(Torr).

A source gas constituting dimethyldichlorosilane was then passed through the chamber to provide the chemical vapor deposition of the matrix 14. The source gas was mixed with a carrier constituting hydrogen and with a diluant constituting argon.

By varying the temperature, pressure and gas flow as shown in Figure 1, the Vickers Hardness Number ($VH_n$) of the matrix 14 has been controlled. This hardness is a function of the free silicon or free carbon in the system. The stoichiometric SiC provided a Vickers hardness ($VH_n$) of about 2600-2800. $VH_n$ numbers above this range have increased amounts of free carbon at the grain boundaries. $VH_n$ numbers below this range have increased amounts of free silicon at the grain boundaries. This may be seen in Figure 9.

As will be seen in rows 1 and 2 of the table constituting Figure 8, the Vickers hardness of the matrix 14 is reduced when the temperature and pressure of the flowing gases are reduced while the rate of the gases, such as dimethyldichlorosilane and argon, is maintained constant. As will be seen in rows 2 and 3 of the table constituting Figure 8, the Vickers hardness of the substrate is increased when the temperature and pressure of the gases are maintained substantially constant and the rate of flow of the dimethyldichlorosilane is

maintained substantially constant but the rate of flow of the argon is increased.

Example No. 6

The same substrate as in Example #5 was used.

The parameters for producing the matrix 14 were as follows:

Pressure- 5mm - 250mm

Temperature - 900-1200°C

Source Gas- Trimethylchlorosilane (TMCS)

- Boron Trichloride ($BCl_3$)

Carrier - Hydrogen

Diluant - Argon

To deposit the matrix 14, coating runs were made with trimethylchlorosilane (TMCS). This resulted in higher deposition rates than obtained with equivalent coatings deposited from dimethylchlorosilane (DMS) or methyltrichlorosilane (MTS). The microstructure, however, tended to become columnar. A columnar structure may not be desirable because it defines lines representing differences in properties. As a result, cracks tend to be produced along these lines.

A 10% addition of boron chloride ($BCl_3$) resulted in microstructure refinement by combining the excess carbon with boron to form $B_4C$ (Boron Carbide). This refinement in microstructure in turn resulted in increased coating strength, a glassy

structure and controllable hardnesses of approximately 3000-4000$VH_n$.

The refinement in microstructure tended to enhance the homogeneity of the matrix 14 by producing particles of reduced size. This prevented the matrix 14 from being columnar. The inclusion of boron chloride to produce a glassy structure was desirable because the boron chloride enhanced the production of the fine grain structure and caused the matrix to be oxidation resistant.

Example No. 7

Typical 1/4" x 1/2" x 4" carbon fiber substrates were prepared by using both a phenolic resin char binder and external fixturing to hold the fibers in position prior to SiC infiltration to form the matrix 14.

Figures 10a and 10b shows the interstices of a fiber bundle to be filled with a resin char and overcoated with a sheath of silicon carbide deposited by chemical vapor deposition (CVD). Those fibers free of char in the areas of the char-bonded fiber bundle are uniformly sheathed with CVD SiC. (Figure 10)

Figures 11 and 12 shows the uniform concentric sheathing of the fibers, their bonding together by the CVD sheath, the lack of bond strength (fiber pull out) between the fiber substrate and the CVD matrix 14 and the open nature of the

substrate interstices even after infiltration with the CVD matrix (Figures 11 and 12).

Example No. 8

Figures 13 and 14 show the dramatic difference in the deposition thickness of the SiC matrix 14 vs fiber location in the substrate 10. Typical CVD infiltration efforts resulted in increased thicknesses of the matrix 14 deposited at, or close to, the surface of the substrate 10. Examined in cross-section, the thickness of the matrix coating in such typical CVD infiltration decreases dramatically as one visually approaches the center of the composite material. This increased thickness in the matrix coating at the periphery of the composite mateial tends to block the material of the matrix 14 from being deposited into the core of the substrate 10. As a result, the external surface of the matrix 14 often has to be shaved in order for the deposition of the matrix to be continued into the core of the substrate 10.

Figures 13 and 14, however, show an ability to control the phenomena discussed in the previous paragraph and, in fact, reverse it. Figures 13 and 14 are at the same magnification and show a typical two-fiber orientation. The relative orientations of the photographs of Figures 13 and 14 in the composite refractory material may be seen from the photograph of Figure 15, which shows the

composite material with a reduced magnification relative to the photographs of Figures 13 and 14. Figure 15 also shows the relative positioning in Figure 15 of the photographs constituting Figures 13 and 14.

Taken within 0.010" of the specimen surface, the photograph of Figure 13 has approximately one-third (1/3) of the matrix thickness shown on the fibers in Figure 14, which is a photograph taken approximately 0.125" from the specimen surface. In other words, the deposition internally in the composite material is thicker than at the surface of the composite material. This deposition was obtained by using methyltrichlorosilane (MTS). A complete reversal of this profile can be made by using DMS under standard infiltration conditions.

In view of the above, the thickness of the matrix at different positions in the composite material can be controlled by varying the properties of the chemical vapor deposition at different times. For example, the thickness of the matrix at different positions in the composite material can be controlled by introducing different chemical vapors (such as trimethylchlorosilane, dimethychlorosilane and methyltrichlorosilane) into the substrate 10 at different times.

The ability to control infiltration thickness can also be used to grade a particular substrate from a CVD filtration bonded to a CVD SiC coated part.

Figure 16 shows a cross section of an infiltrated fibrous part integrally locked (bonded) to a homogeneous CVD SiC overcoating.

Example No. 9

Diluants such as argon and helium have been successfully used to control (such as by flattening) deposition profiles, suppress soot formation and control the microstructure of the matrix 14 and other layers such as the intermediate layer 24. Because of its specific heat, argon has been used to cool or maintain the reactive temperatures of the gases within controlled limits when the set-up geometry and mass/gas flow conditions has indicated the desirability of this. Since helium has a relatively high specific heat, helium has been used to increase the reactive temperatures of the gas, thus providing an ability to minimize set-up flow distances and still achieve maximum gas temperatures in the reactive zone.

Example No. 10

Silicon carbide (SiC) and graphite grains or particles and graphite and/or ceramic fibers have been combined to form the substrate 10. Such combinations have been successful. For example, typical flexural strengths of approximately 8-10,000 psi for a phenolic char-bonded silicon carbide grain substrate, infiltrated to 2.10 grams/cc to form the matrix 14, have been

produced. This is approximately equal to the strength of commercially available silicon nitride bonded to SiC grain at densities of greater than 2.80gm/cc.

Example No. 11

Substitution of silicon carbide grain (particles) and graphite particles -- A combination of SiC and graphite particles, and particles with continuous and discontinuous graphite and/or ceramic fibers, has been successful in providing a satisfactory substrate. This substrate replaces substrates made entirely from fibers such as the substrates specified above in Examples 1 and 2. A typical flexural strength of a phenolic char-bonded SiC grain substrate, infiltrated to 2.10 gm/cc, is approximately 8-10,000 psi. This is approximately equal to the strength, at densities greater than 2.80 gm/cc, of commercially available SiC grain bonded with silicon nitride.

Example No. 12

Density - 0.1 gm/cc

Fiber Volume - 7%

The steps specified below have been used to produce a starting substrate with the characteristics specified above in this Example #11. As a first step, the carbonized rayon felt was heated to 1150-1200°C to stabilize the felt thermally. The temperature of the felt was then reduced to

approximately 900-1100°C. Atmosphere - Vacuum 5-25 mm Hg (Mercury). The vacuum valve was then closed approximately 600 cc/hr of $Si(CH_3)Cl_3$ (Methyltrichlorosilane), 9 LPH $H_2$ (Hydrogen) and 20 LPH ar (Argon) was allowed to flow until the chamber pressure increased to approximately 125-225 mm Hg (Mercury).

The vacuum valve was then opened and the pressure was reduced to approximately 5-25 mm Hg. On reaching the pressure of approximately 5-25 mm Hg, the cycle specified above was repeated for a sufficient number of cycles to achieve the desired final density.

Because the requirements for the construction of the starting substrate and for the density of the final component vary widely from application to application, the actual process time and chamber set-up may also be modified as a function of the component design and the operational need.

The invention provides refractory composite articles which are hard, tough, dimensionally stable, resistant to corrosion and erosion and capable of operating satisfactorily through extended ranges of temperatures. It also provides methods of producing such articles.

Although this invention has been disclosed and illustrated with reference to particular embodiments, the principles involved are capable of being used in numerous other embodiments which will be apparent to persons skilled in the art. The invention is, therefore, to be limited only as indicated by the scope of the appended claims.

Various aspects of the present invention are defined in the numbered paragraphs below.

1. A method of producing a refractory composite article, including the following steps:

providing a porous substrate having a first coefficient of thermal expansion,

depositing on the substrate an impermeable coating having a second coefficient of thermal expansion different from the first coefficient of thermal expansion to provide for a free movement of the impermeable coating relative to the substrate, and

depositing on the impermeable coating a permeable coating having substantially the second coefficient of thermal expansion to provide for a movement of the permeable coating with the impermeable coating relative to the substrate with changes in temperature.

2. A method as set forth in para. 1 wherein

the impermeable coating is deposited in a very thin layer.

3. A method as set forth in para. 1, including the step of:

depositing on the permeable coating a second coating having impermeable properties and having substantially the second coefficient of thermal expansion to provide for a movement of the second impermeable coating with the permeable coating relative to the substrate with changes in temperature.

4. A method as set forth in para. 1 wherein the substrate has a base selected from a group consisting of carbon and a ceramic, the impermeable coating is silicon nitride and the permeable coating is silicon carbide.

5. A method as set forth in para. 3 wherein the substrate has a base selected from a group consisting of carbon and a ceramic, the impermeable coating is silicon nitride, the permeable coating is silicon nitride and the second impermeable coating is silicon oxide.

6. A method of forming a refractory composite article, including the steps of:

providing a porous, permeable substrate,

depositing on the substrate a porous, impermeable coating without any chemical bond to the substrate and with properties of being freely movable relative to the substrate with changes in temperature, and

depositing on the impermeable coating a porous, permeable coating with properties of being movable with the impermeable coating with changes in temperature.

7. A method as set forth in para. 6, including the step of:

depositing on the porous, permeable coating a porous, impermeable coating with properties of being movable with the permeable coating with changes in temperature.

8. A method as set forth in para. 6 wherein

the porous substrate is formed from a plurality of discrete elements and wherein

the impermeable coating is in a thin layer encasing the discrete elements andwherein

the porous, permeable coating encases the porous, impermeable coating.

9. A method as set forth in para. 6 wherein

the substrate is formed from a plurality of discrete elements defining interstices,

the impermeable coating is deposited in the interstices between the discrete elements and

the porous, permeable coating is deposited on the porous, impermeable coating in the interstices between the discrete elements.

10. A method as set forth in para. 8, including the step of:

encasing the porous, permeable coating with a deposition of a porous, impermeable coating with properties of being movable with the permeable coating with changes in temperature.

11. A method as set forth in para. 9, including the step of:

depositing on the porous, permeable coating, in the interstices between the discrete elements, an impermeable coating with properties of being movable with the porous, permeable coating with changes in temperature.

12. A method of making a refractory, composite article, including the steps of:

forming a porous substrate having a first coefficient of thermal expansion, and

depositing on the substrate a porous layer of a non-stoichiometric compound formed from a metal and a material providing negatively charged ions, a particular one of the metal and the material providing the negatively charged ions being deposited in the non-stoichiometric layer in a relative amount greater than their stoichiometric ratios in the compound,

the porous layer of the non-stoichiometric compound having a second coefficient of thermal expansion different from the first coefficient of thermal expansion to provide for a free movement of such layer relative to the substrate with changes in temperature.

13. A method as set forth in para. 12 wherein

the inclusion of the metal in the layer of the non-stoichiometric in relative amounts greater than the stoichiometric ratio decreases any permeable properties of the layer and the hardness of the layer.

14. A method as set forth in para. 12 wherein

the inclusion in the layer, in relative amounts greater than the stoichiometric ratio, of the material providing the negatively charged ions increases any permeable properties of the layer and the hardness of the layer.

15. A method as set forth in para. 13, including the step of:

depositing an impermeable layer on the non-stoichiometric layer.

16. A method as set forth in para. 12, including:

the porous layer encasing the substrate,

depositing an impermeable layer on the porous layer to encase the porous layer.

17. A method as set forth in para. 12, including:

the substrate being formed from a plurality of discrete elements and the porous layer being disposed in the interstices between the discrete elements and

depositing an impermeable layer on the porous layer in the interstices between the discrete elements.

18. A method of forming a refractory composite article, including the steps of:

forming a porous, permeable substrate having a first coefficient of thermal expansion,

depositing on the substrate a porous, permeable non-stoichiometric coating of a compound having a second coefficient of thermal expansion different from the first coefficient of thermal expansion and formed from positive ions of a metal and negatively charged ions of a material to provide for a free movement of the non-stoichiometric coating relative to the substrate with changes in temperature, and

adjusting the relative amounts of the metal and the material providing the negatively charged ions at different thicknesses of the non-stoichiometric coating to vary the

properties of the non-stoichiometric coating at such different thickness.

19. A method as set forth in para. 18 wherein an excess of the metal in the non-stoichiometric ratio above the stoichiometric ratio decreases the hardness and permeability of the coating and an excess of the material providing the negatively charged ions in the non-stoichiometric ratio above the stoichiometric ratio increases the hardness and permeability of the coating and wherein the coating is provided with an excess of the metal at thickness positions closer to the substrate and with an excess of the material providing the negatively charged ions at thickness positions removed from the substrate.

20. A method as set forth in para. 18, including the step of:

depositing on the non-stoichiometric coating a layer of an impermeable material.

21. A method as set forth in para. 19 wherein the non-stoichiometric coating is formed from silicon carbide and wherein

a layer of a material selected from a group consisting of silicon nitride and silicon oxide is deposited on the non-stoichiometric coating to form a porous, impermeable layer.

22. A method as set forth in para. 18 wherein

the excess of the particular one of the metal and the material providing the negatively charged ions above the stoichiometric ratio in the non-stoichiometric coating is controlled by providing a chemical vapor deposition of a gas containing the metal and the material providing the negatively charged ions and by controlling various factors in the chemical vapor deposition including the temperature, pressure, flow rate, mass rate and composition of the gases.

23. A method of making a refractory composite article, including the steps of:

providing a porous, permeable substrate having a first coefficient of thermal expansion,

providing on the porous, permeable substrate a matrix having a second coefficient of thermal expansion different from the first coefficient of thermal expansion,

the matrix being disposed on the substrate without any chemical bond to provide for changes in the position of the matrix relative to the substrate with changes in temperature,

the matrix having microscopic cracks in its peripheral surface, and

providing a hard impermeable coating on the porous, permeable coating to cover the porous, permeable coating including the microscopic cracks in the porous, permeable coating.

24. A method as set forth in para. 23 wherein

the substrate is formed from a plurality of discrete elements and

the matrix is provided by chemical vapor deposition and is formed to encase the discrete elements in the substrate and

the impermeable coating is provided by chemical vapor deposition and is formed to encase the matrix.

25. A method as set forth in para. 23 wherein

the substrate is formed from discrete elements spaced to define interstices and

the matrix is formed by a chemical vapor deposition and is deposited in the interstices between the discrete elements of the substrate and wherein

the impermeable coating is formed by a chemical vapor deposition and is deposited in the interstices between the discrete elements of the substrate.

26. A method as set forth in para. 24 wherein

the matrix is formed from a non-stoichiometric compound constituting a metal and a material providing negatively charged ions and wherein an excess is provided above the stoichiometric ratio of a particular one of the metal and the material providing the negatively charged ions to control the characteristics of the matrix.

27. A method as set forth in para. 25 wherein

the matrix is formed from a non-stoichiometric compound constituting a metal and a material providing negatively charged ions and wherein an excess is provided above the stoichiometric ratio of a particular one of the metal and

the material providing the negatively charged ions to control the characteristics of the matrix.

28. A method as set forth in para. 23, including the step of:

providing on the substrate, between the substrate and the matrix, a porous, impermeable coating to prevent the substrate from oxidizing.

29. A refractory composite article, including:

a porous, permeable substrate having a first coefficient of thermal expansion,

an impermeable coating disposed on the substrate without any chemical bonding to the substrate, the impermeable coating having a second coefficient of thermal expansion different from the first coefficient of thermal expansion to provide changes in position of the impermeable coating relative to the substrate with changes in temperature, and

a permeable matrix disposed on the impermeable coating and having substantially the second coefficient of thermal expansion to provide for a movement of the matrix with the impermeable coating relative to the substrate with changes in temperature.

30. A refractory composite article as set forth in para. 29 wherein

the matrix is provided with microscopic cracks and wherein

an impermeable coating is disposed on the matrix and is disposed in the microscopic cracks and is provided with

substantially the second coefficient of thermal expansion to provide for a movement of this impermeable coating with the matrix relative to the substrate with changes in temperature.

31. A refractory composite article as set forth in para. 29 wherein

the impermeable layer is thin and the substrate is formed from discrete elements and

the impermeable coating encases the discrete elements and

the matrix encases the impermeable coating.

32. A refractory composite article as set forth in para. 29 wherein

the substrate is formed from discrete elements disposed relative to one another to define interstices and the impermeable layer is thin and the impermeable layer and the matrix are disposed in the interstices.

33. A refractory composite material as set forth in para. 31 wherein

the matrix is formed from at least a pair of chemically reactive elements included in the matrix in non-stoichiometric ratios.

34. A refractory composite material as set forth in para. 32 wherein

the matrix is formed from at least a pair of chemically reactive elements included in the matrix in non-stoichiometric ratios.

35. A refractory composite material, including:
a porous, permeable substrate, and
a matrix disposed on the substrate without any chemical bond to the substrate and providing for a movement at the matrix relative to the substrate, the matrix being formed from at least a pair of chemically reactive elements included in the matrix in non-stoichiometric ratios.

36. A refractory composite material as set forth in para. 35 wherein
the non-stoichiometric ratio of the chemically reactive elements in the matrix varies at different positions of thickness of the matrix.

37. A refractory composite material as set forth in para. 35 wherein
the matrix has individual properties at different thickness positions in the matrix in accordance with the non-stoichiometric ratio of the chemically reactive elements in the matrix.

38. A refractory composite material as set forth in para. 37 wherein
the matrix has properties of being relatively impermeable at thickness positions near the substrate and has properties of being relatively hard at thickness positions displaced from the substrate.

39. A refractory composite material as set forth in para. 38 wherein

the matrix is made from a material selected from a group consisting of silicon carbide, silicon nitride and silicon carbide.

40. A refractory composite material, including:

a porous, permeable substrate having a first coefficient of thermal expansion, and

a matrix disposed on the substrate without chemical bonding to the substrate, the matrix having a second coefficient of thermal expansion different from the first coefficient of thermal expansion and being movable relative to the substrate with changes in temperature,

the matrix being formed from a metal and a material providing negatively charged ions and having non-stoichiometric ratios of the metal and the material providing the negative ions.

41. A refractory composite article as set forth in para. 40 wherein

the non-stoichiometric ratios of the metal and the material providing the negatively charged ions control the characteristics of hardness and permeability of the matrix.

42. A refractory composite material as set forth in para. 41 wherein

the non-stoichiometric ratio of the metal and the material providing the negatively charged ions is varied at different positions of thickness of the matrix.

43. A refractory composite material set forth in para. 40, including:

an impermeable coating disposed on the matrix and having substantially the second coefficient of thermal expansion.

44. A refractory composite article as set forth in para. 40, including:

an impermeable coating disposed between the substrate and the matrix and having substantially the first coefficient of thermal expansion.

45. A refractory composite article as set forth in para. 40 wherein

the matrix is formed from silicon carbide and wherein an excess of silicon in the matrix above the stoichiometric ratio decreases the permeability and hardness of the matrix relative to the properties of the matrix formed from silicon carbide in the stoichiometric ratio and wherein an excess of carbon in the matrix above the stoichiometric ratio increases the permeability and hardness of the matrix relative to the properties of the matrix formed from silicon carbide in the stoichiometric ratio.

46. A refractory composite article as set forth in para. 45 wherein

an excess of silicon is provided in the matrix above the stoichiometric ratios at thickness positions near the substrate and an excess of carbon is provided in the matrix

above the stoichiometric ratios at thickness positions displaced from the substrate.

47. A refractory composite article as set forth in para. 45 wherein

an excess of silicon is provided in the matrix above the stoichiometric ratios at thickness positions near the substrate and an excess of carbon is provided in the matrix above the stoichiometric ratios at thickness positions displaced from the substrate.

48. A refractory composite article, including:

a porous, permeable substrate and having a first coefficient of thermal expansion,

a matrix disposed on the substrate and having a second coefficient of thermal expansion, the matrix being free to move relative to the substrate with changes in temperature,

the matrix having microscopic cracks in its periphery, and

an impermeable coating disposed on the matrix and covering the microscopic cracks and having substantially the second coefficient of thermal expansion.

49. A refractory composite article as set forth in para. 48 wherein

the matrix is disposed on the substrate without any chemical bond to the substrate and the microscopic cracks in the matrix provide for flexibility of the matrix.

50. A refractory composite article as set forth in para. 48 wherein the substrate is formed from a plurality of discrete elements and the matrix and the impermeable coating encase the discrete elements.

51. A refractory composite article as set forth in para. 48 wherein the substrate is formed from a plurality of discrete elements defining interstices and the matrix is disposed on the discrete elements in the interstices of the discrete elements and the impermeable coating is disposed on the matrix in the interstices.

52. A refractory composite article as set forth in para. 48 wherein the discrete elements have a carbon base and the matrix is formed from a material selected from a group consisting of silicon carbide, silicon nitride and silicon oxide and the impermeable coating is formed from a material selected from a group consisting of silicon oxide and silicon nitride.

53. A refractory composite article as set forth in para. 51 wherein the discrete elements have a carbon base and

the matrix is formed from a material selected from a group consisting of silicon carbide, silicon nitride and silicon oxide and

the impermeable coating is formed from a material selected form a group consisting of silicon oxide and silicon nitride.

54. A method as set forth in para. 1 wherein

the impermeable coating is formed from a material selected from a group consisting of metal oxides, metal nitrides, metal silicides, metal borides and metal carbides.

55. An article as set forth in para. 48 wherein

the impermeable coating is formed from a material selected from a group consisting of metal oxides, metal nitrides, metal silicides, metal borides and metal carbides.

CLAIMS

1. A method of producing a refractory composite article, including the following steps:

providing a porous substrate having a first coefficient of thermal expansion,

depositing on the substrate an impermeable coating having a second coefficient of thermal expansion different from the first coefficient of thermal expansion to provide for a free movement of the impermeable coating relative to the substrate, and

depositing on the impermeable coating a permeable coating having substantially the second coefficient of thermal expansion to provide for a movement of the permeable coating with the impermeable coating relative to the substrate with changes in temperature.

2. A method as set forth in claim 1, including the step of:

depositing on the permeable coating a second coating having impermeable properties and having substantially the second coefficient of thermal expansion to provide for a movement of the second impermeable coating with the permeable coating relative to the substrate with changes in temperature.

3. A method as set forth in claim 2 wherein the substrate has a base selected from a group consisting of carbon and a ceramic, the impermeable coating is silicon nitride, the permeable coating is silicon nitride and the second impermeable coating is silicon oxide.

4. A method of forming a refractory composite article, including the steps of:

providing a porous, permeable substrate,

depositing on the substrate a porous, impermeable coating without any chemical bond to the substrate and with properties of being freely movable relative to the substrate with changes in temperature, and

depositing on the impermeable coating a porous, permeable coating with properties of being movable with the impermeable coating with changes in temperature.

5. A method as set forth in claim 4, including the step of:
depositing on the porous, permeable coating a porous, impermeable coating with properties of being movable with the permeable coating with changes in temperature.

6. A method as set forth in claim 4 or 5 wherein the porous substrate is formed from a plurality of discrete elements and wherein
the impermeable coating is in a thin layer encasing the discrete elements and wherein
the porous, permeable coating encases the porous, impermeable coating.

7. A method as set forth in claim 4 or 5 wherein the substrate is formed from a plurality of discrete elements defining interstices,
the impermeable coating is deposited in the interstices between the discrete elements and
the porous, permeable coating is deposited on the porous, impermeable coating in the interstices between the discrete elements.

8. A method of making a refractory, composite article, including the steps of:
forming a porous substrate having a first coefficient of thermal expansion, and
depositing on the substrate a porous layer of a non-stoichiometric compound formed from a metal and a material providing negatively charged ions, a particular one of the metal and the material providing the negatively charged ions being deposited in the non-stoichiometric layer in a relative amount greater than their stoichiometric ratios in the compound,
the porous layer of the non-stoichiometric compound having a second coefficient of thermal expansion different from the first coefficient of thermal expansion to provide for a free movement of such layer relative to the substrate with changes in temperature.

9. A method as set forth in claim 8 wherein the inclusion of the

metal in the layer of the non-stoichiometric in relative amounts greater than the stoichiometric ratio decreases any permeable properties of the layer and the hardness of the layer, and wherein

the inclusion in the layer, in relative amounts greater that the stoichiometric ratio, of the material providing the negatively charged ions increases any permeable properties of the layer and the hardness of the layer.

10. A method as set forth in claim 8 or 9, including the step of:

depositing an impermeable layer on the non-stoichiometric layer.

11. A method of forming a refractory composite article, including the steps of:

forming a porous, permeable substrate having a first coefficient of thermal expansion,

depositing on the substrate a porous, permeable non-stoichiometric coating of a compound having a second coefficient of thermal expansion different from the first coefficient of thermal expansion and formed from positive ions of a metal and negatively charged ions of a material to provide for a free movement of the non-stoichiometric coating relative to the substrate with changes in temperature, and

adjusting the relative amounts of the metal and the material providing the negatively charged ions at different thicknesses of the non-stoichiometric coating to vary the properties of the non-stoichiometric coating at such different thickness.

12. A method of making a refractory composite article, including the steps of:

providing a porous, permeable substrate having a first coefficient of thermal expansion,

providing on the porous, permeable substrate a matrix having a second coefficient of thermal expansion different from the first coefficient of thermal expansion,

the matrix being disposed on the substrate without any chemical bond to provide for changes in the position of the matrix relative

to the substrate with changes in temperature,

the matrix having microscopic cracks in its peripheral surface, and

providing a hard impermeable coating on the porous, permeable coating to cover the porous, permeable coating including the microscopic cracks in the porous, permeable coating.

13. A refractory composite article, including:

a porous, permeable substrate having a first coefficient of thermal expansion,

an impermeable coating disposed on the substrate without any chemical bonding to the substrate, the impermeable coating having a second coefficient of thermal expansion different from the first coefficient of thermal expansion to provide changes in position of the impermeable coating relative to the substrate with changes in temperature, and

a permeable matrix disposed on the impermeable coating and having substantially the second coefficient of thermal expansion to provide for a movement of the matrix with the impermeable coating relative to the substrate with changes in temperature.

14. A refractory composite article as set forth in claim 13 wherein

the matrix is provided with microscopic cracks and wherein

an impermeable coating is disposed on the matrix and is disposed in the microscopic cracks and is provided with substantially the second coefficient of thermal expansion to provide for a movement of this impermeable coting with the matrix relative to the substrate with changes in temperature.

15. A refractory composite article as set forth in claim 13 wherein

the impermeable layer is thin and the substrate is formed from discrete elements and

the impermeable coating encases the discrete elements and

the matrix encases the impermeable coating, and is formed from at least a pair of chemically reactive elements included in the matrix in non-stoichiometric ratios.

16. A refractory composite material, including:

a porous, permeable substrate, and

a matrix disposed on the substrate without any chemical bond to the substrate and providing for a movement at the matrix relative to the substrate, the matrix being formed from at least a pair of chemically reactive elements included in the matrix in non-stoichiometric ratios.

17. A refractory composite material as set forth in claim 16 wherein

the matrix has individual properties at different thickness positions in the matrix in accordance with the non-stoichiometric ratio of the chemically reactive elements in the matrix.

18. A refractory composite material as set forth in claim 17 wherein

the matrix has properties of being relatively impermeable at thickness positions near the substrate and has properties of being relatively hard at thickness positions displaced from the substrate.

19. A refractory composite material, including:

a porous, permeable substrate having a first coefficient of thermal expansion, and

a matrix disposed on the substrate without chemical bonding to the substrate, the matrix having a second coefficient of thermal expansion different from the first coefficient of thermal expansion and being movable relative to the substrate with changes in temperature,

the matrix being formed from a metal and a material providing negatively charged ions and having non-stoichiometric ratios of the metal and the material providing the negative ions, wherein

the non-stoichiometric ratios of the metal and the material providing the negatively charged ions control the characteristics of hardness and permeability of the matrix.

20. A refractory composite material set forth in claim 19, including:

an impermeable coating disposed on the matrix and having substantially the second coefficient of thermal expansion.

21. A refractory composite article as set forth in claim 19, including:

an impermeable coating disposed between the substrate and the matrix and having substantially the first coefficient of thermal expansion.

22. A refractory composite article, including:

a porous, permeable substrate and having a first coefficient of thermal expansion,

a matrix disposed on the substrate and having a second coefficient of thermal expansion, the matrix being free to move relative to the substrate with changes in temperature,

the matrix having microscopic cracks in its periphery, and

an impermeable coating disposed on the matrix and covering the microscopic cracks and having substantially the second coefficient of thermal expansion.

0200568

1/11

FIG.1

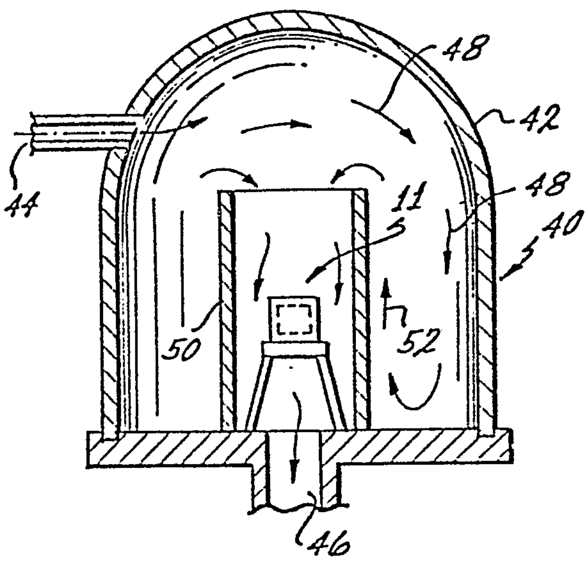


FIG.5

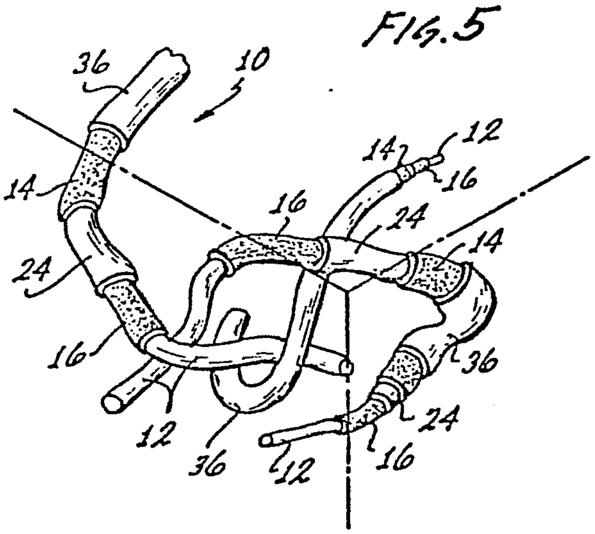


FIG.7

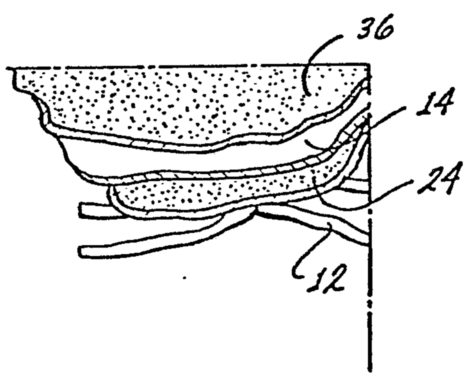


FIG.6

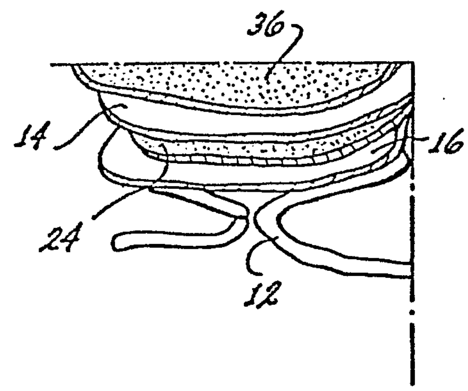

FIG.2

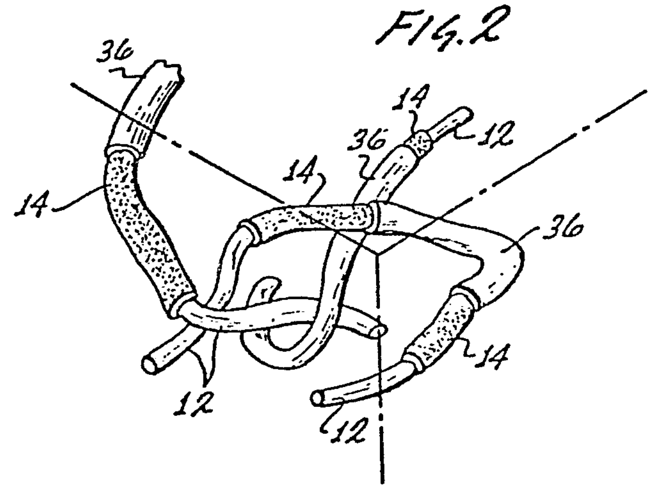


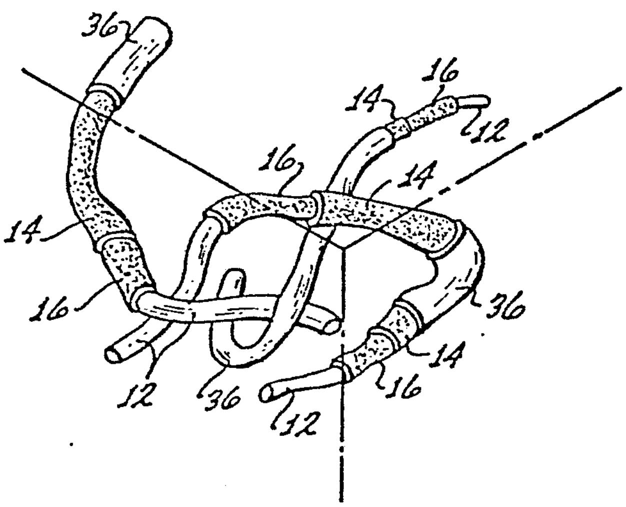


FIG.3

FIG.4

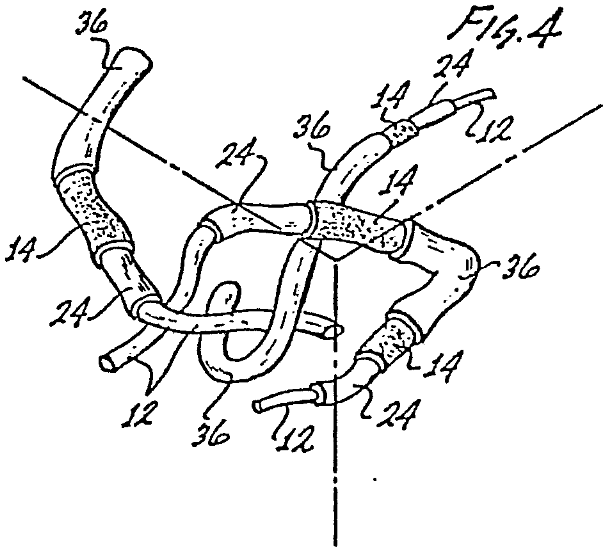

COATING STUDY ON

WEAR-TEST SPECIMENS

Allowed for .005 coating on OD, ID, & Thickness.

Run Condition Matrix

| RUN # | TEMP (°C) | PRESS ("Hg) | Dimethyl-chloro-silane (DMS) cc/Hr | Argon (cc/Min) | Hydrogen ($H_2$) | Vickers Hardness Number ($HV_n$) |
|---|---|---|---|---|---|---|
| 1 | 1060°C | 29" | 600 | 9000 | --- | 4120 |
| 2 | 1040°C | 23" | 600 | 9000 | --- | 3240 |
| 3 | 1050°C | 23" | 600 | 7000 | --- | 3800 |
| 4 | 1100°C | 23" | 600 | 9000 | --- | 2860 |
| 5 | 1040°C | Cyclical mts | 600 | ---- | 9000 | 1800 |
| | STANDARD INFILTRATION CYCLE CONDITIONS | | | | | |

Run 2 sets/run (2 rotating washers and 2 stationary discs)

Set-up Geometry same for Run's #1-4

FIG. 8.

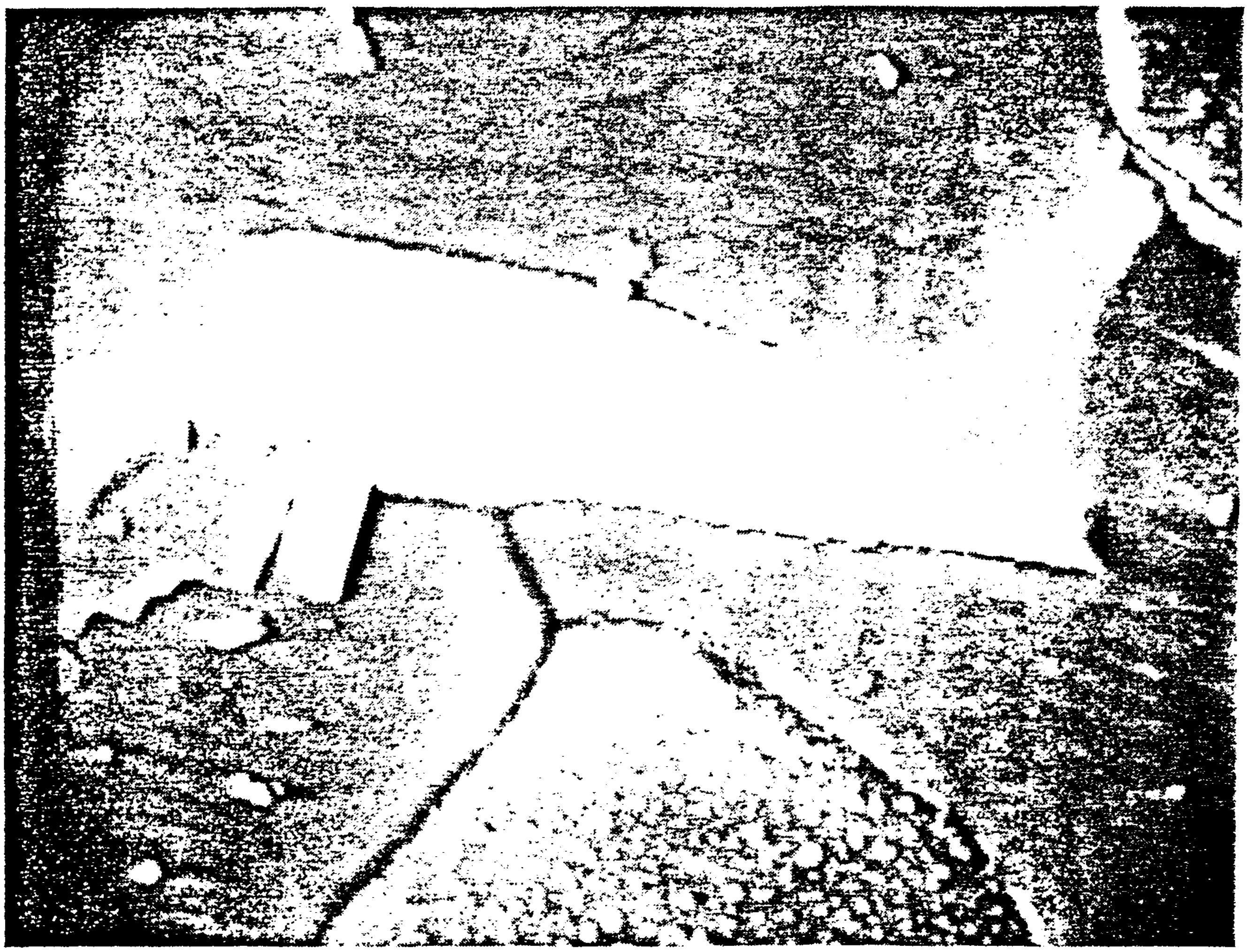

CVD SiC 5000X BLOCKY GRAIN

Fig. 9

Fig 10a



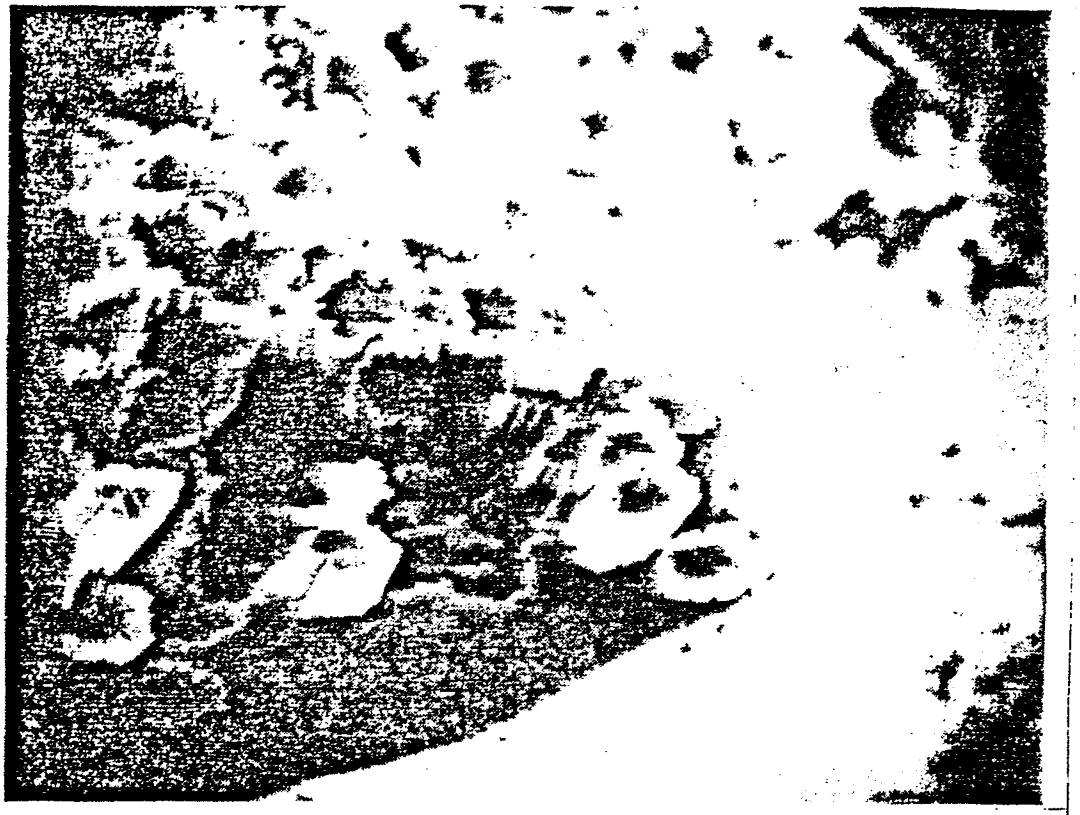

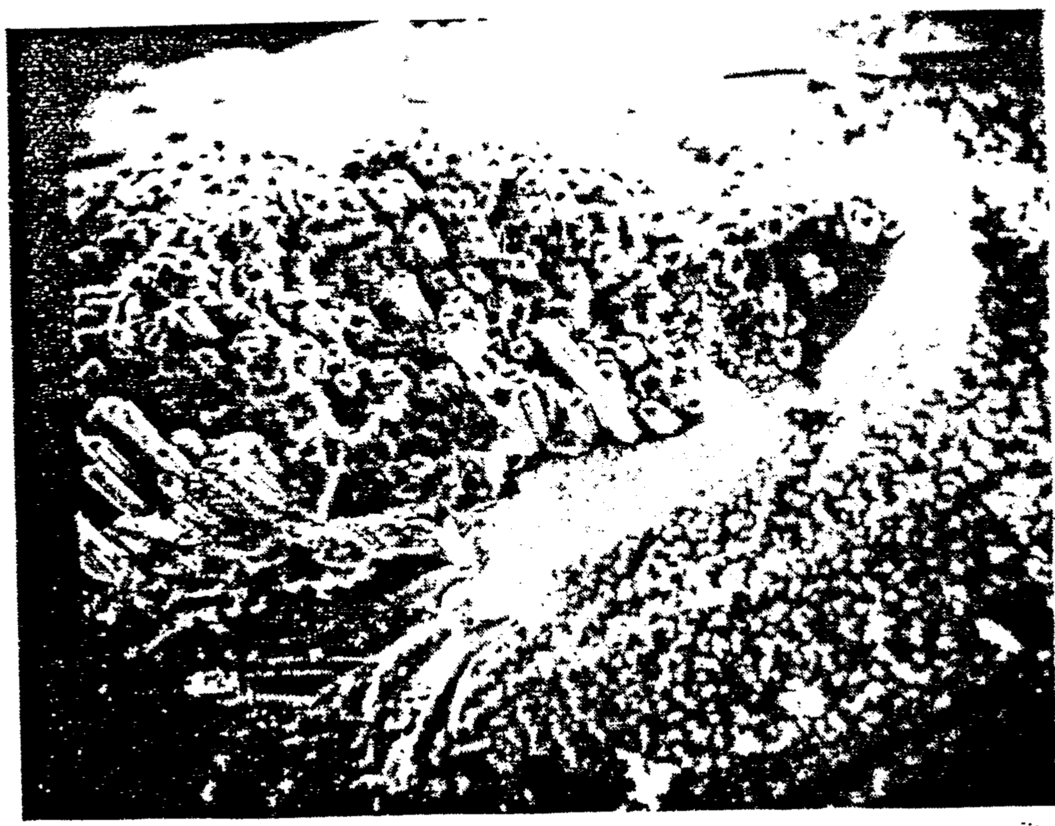

Fig 10b

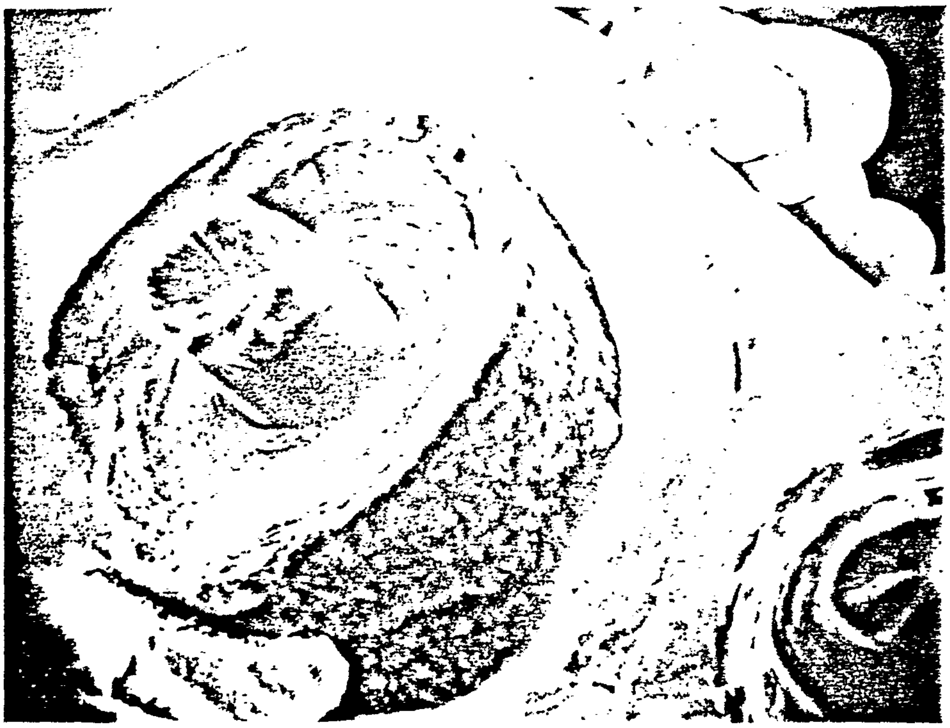

RE-COMP-201 CVD SiC INFILTRATED
CARBON/CARBON COMPOSITE 2400 X

Fig. 11

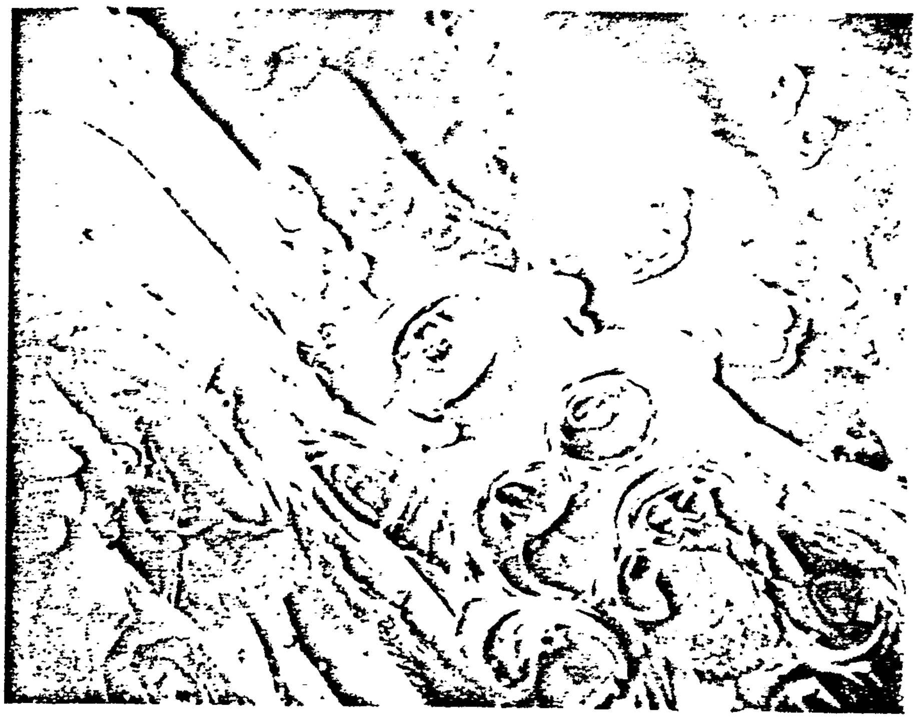

RE-COMP-201 CVD SiC INFILTRATED
CARBON/CARBON COMPOSITE 600 X

Fig. 12

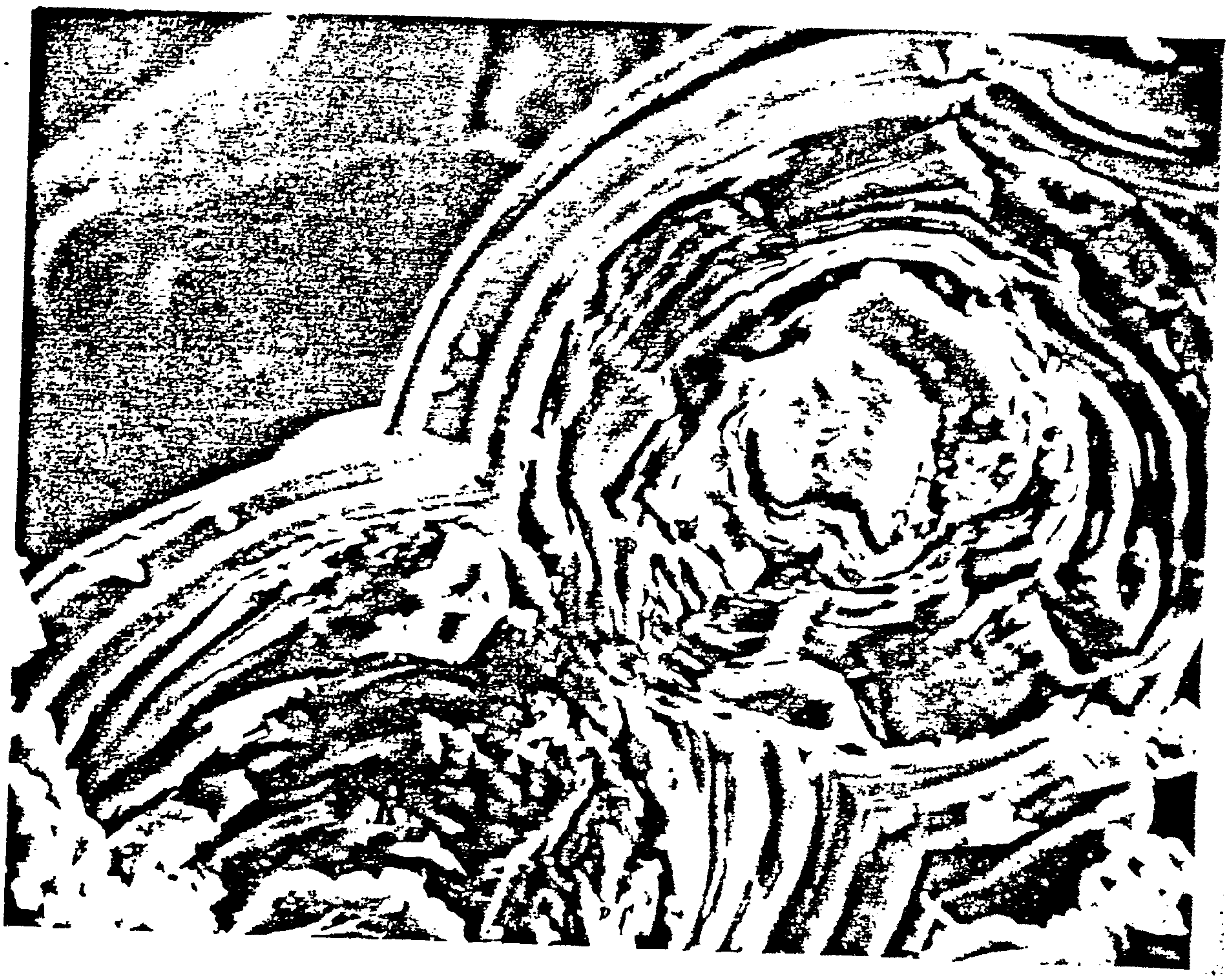

Fig. 13

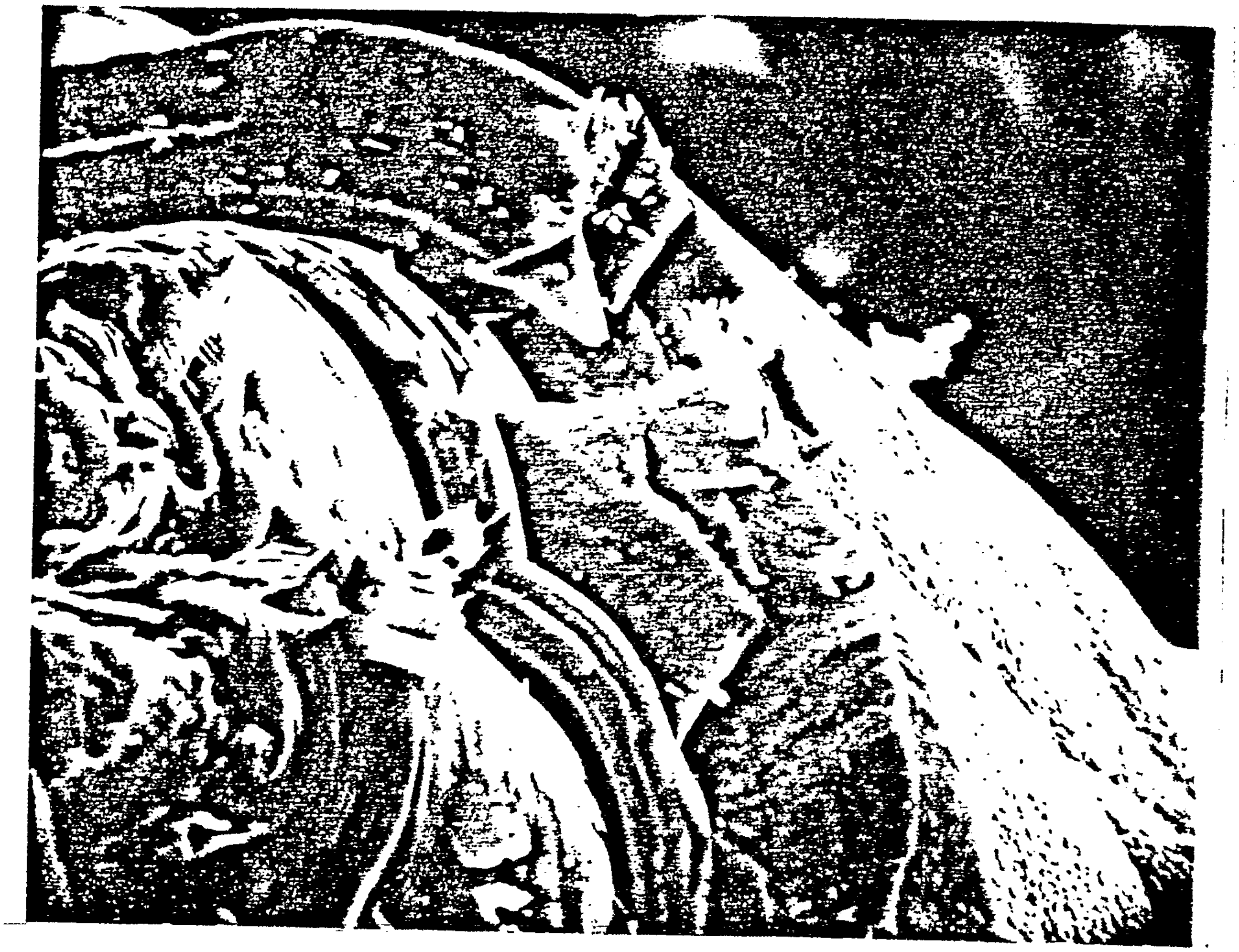

Fig. 14

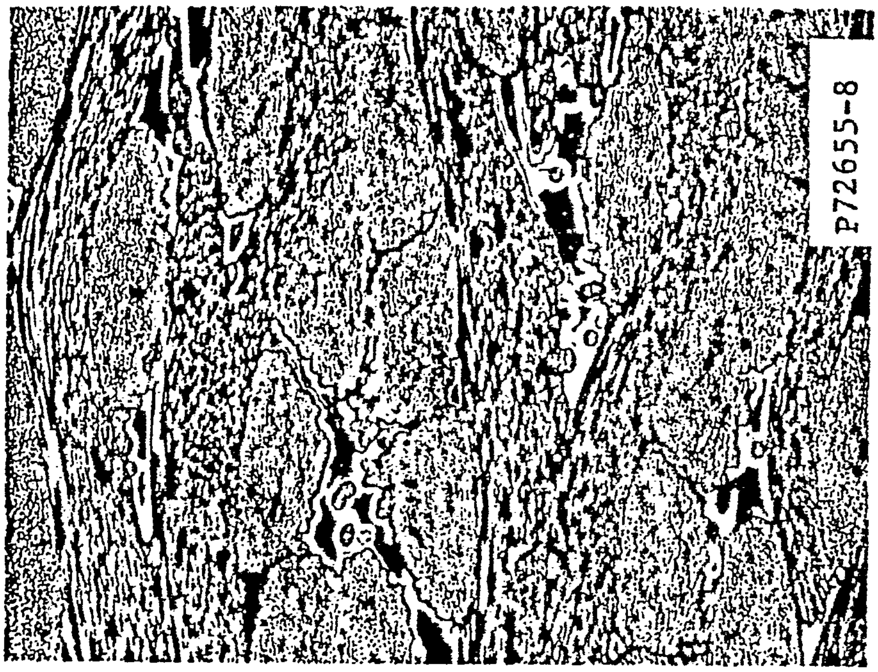


50X

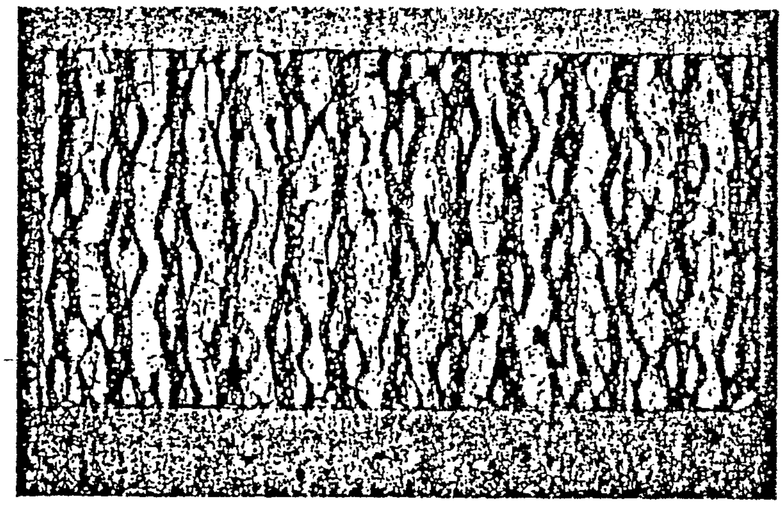

7.5X

Fig. 15

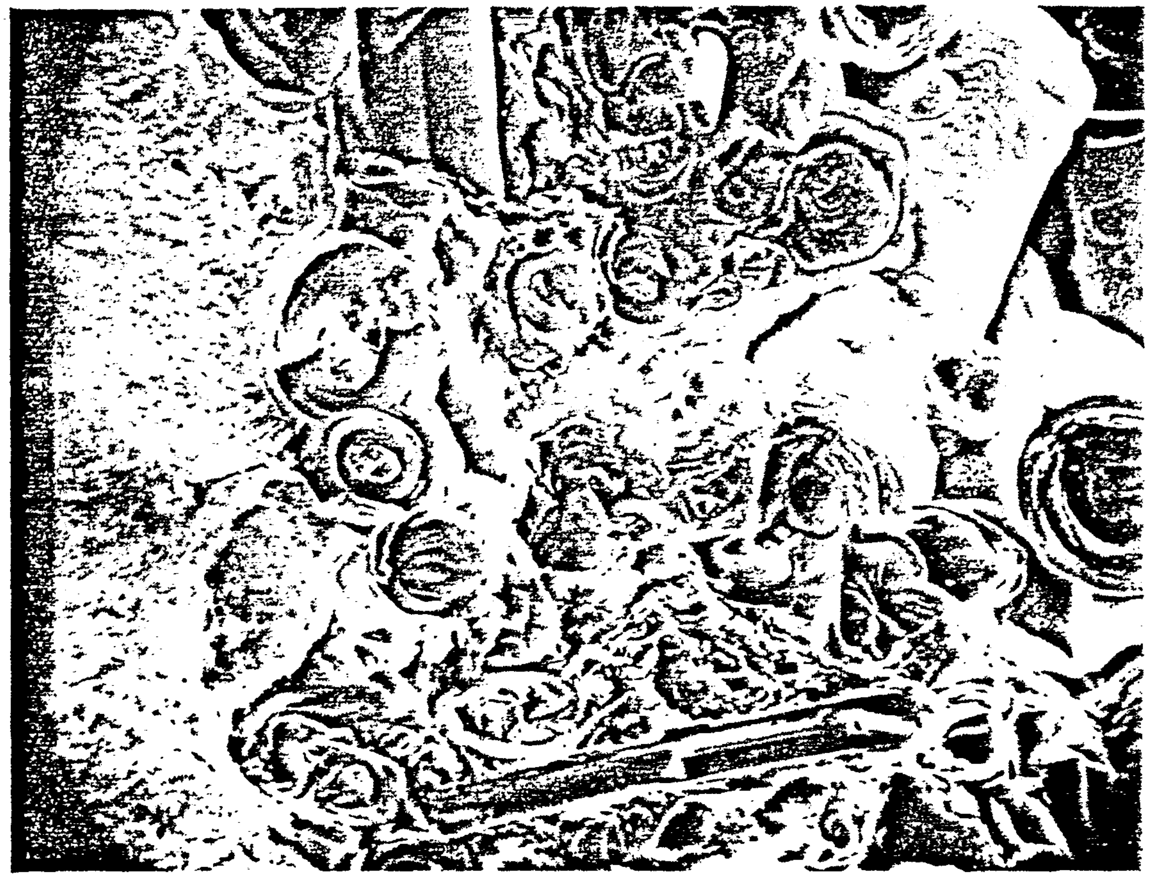

RE-COMP-201 CVD SiC INFILTRATED
CARBON/CARBON COMPOSITE 500 X

Fig 16